# EUROPEAN PATENT SPECIFICATION

(11) **EP 4 593 207 B1**
(45) Date of publication and mention of the grant of the patent: **09.12.2026**
(21) Application number: 24206822.9
(22) Date of filing: 16.10.2024
(51) Int. Cl.: H01R 13/46, G06T 7/00, H01R 13/629, H01R 13/641, H01R 13/627

(54) **CONNECTOR ASSEMBLY SYSTEM AND RELATED METHODS**
VERBINDERANORDNUNGSSYSTEM UND ZUGEHÖRIGE VERFAHREN
SYSTÈME D'ENSEMBLE CONNECTEUR ET PROCÉDÉS ASSOCIÉS

(30) Priority: 23.01.2024 US 202463623974 P; 23.02.2024 US 202418585141
(43) Date of publication of application: 30.07.2025
(73) Proprietor: Aptiv Technologies AG, 8200 Schaffhausen (CH)
(72) Inventor: LEWIS, Ryan, 8200 Schaffhausen (CH); CAMPBELL, Jeffrey, 8200 Schaffhausen (CH); WEBER, Wesley, 8200 Schaffhausen (CH)
(74) Representative: Bardehle Pagenberg Partnerschaft mbB Patentanwälte Rechtsanwälte

(56) References cited:
- US-A1- 20230 088 130
- US-B1- 9 583 860

## Description

### CROSS-REFERENCE TO RELATED APPLICATIONS

This application claims the benefit of U.S. Provisional Application No. 63/623,974 filed January 23, 2024.

### FIELD

The present disclosure relates to a connector assembly system and more particularly to an automated connector assembly system configured to determine a status of a first connector relative to a second connector.

### BACKGROUND

Modern vehicles (e.g., automobiles) rely on electrical wiring and electrical connections to facilitate communication between various electronic components within the vehicle. Connection systems (e.g., connector assemblies) play an important role in ensuring the integrity of these electrical connections and in the reliability and performance of the vehicle. Traditional connector assembly systems use haptic feedback and secondary connector position assurance (CPA) components to ensure that a connector assembly has been fully and properly assembled. Automated (e.g., robotic) assembly systems use a barcode or similar indicator that can only be read when the connector assembly is fully and properly assembled. While known connector assembly systems have proven acceptable for their intended purpose, a continuous need for improvement remains in the pertinent art.

US 9 583 860 B1 relates to an electrical connector with recordable position assurance. The electrical connector includes a housing, an electrical conductor, an indicating feature, and a concealing feature. The housing is configured to engage a complementary mating connector during a mating operation. The indicating feature and the concealing feature are both carried by the housing. The indicating feature has a visual identifier disposed thereon. The indicating feature and the concealing feature are movable relative to each other between a concealed position and an exposed position. The concealing feature conceals at least a portion of the visual identifier in the concealed position. The visual identifier is exposed or exposable in the exposed position. The indicating feature is in the exposed position relative to the concealing feature when the housing is fully mated to the mating connector and is in the concealed position relative to the concealing feature when the housing and mating connector are not fully mated.

US 2023/088130 A1 is directed to a connector assembly including a first housing having an indicium imprinted thereon and a movable member movable from a first position configured to render the indicium illegible to an optical scanning device to a second position configured to render the indicium legible to the optical scanning device. The indicium is visible when the movable member is in the first position and when the movable member is in the second position. A method of mating a connector assembly having a movable member and an indicum imprinted thereon is also presented.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One aspect of the disclosure provides a connector assembly system. The connector assembly includes a first connector, a second connector, and a sensor system. The first connector has a feature. The second connector is configured to mate with the first connector and has a window. The sensor system is configured to capture a characteristic of the feature through the window, compare a value of the characteristic to a predetermined value of the characteristic, and determine a status of the first connector relative to the second connector based on the comparison of the value of the characteristic to the predetermined value.

Another aspect of the disclosure provides a connector assembly system. The connector assembly system includes a first connector, a second connector, and a sensor system. The first connector includes a body having a first color and a feature connected to the body and having a second color that is different than the first color. The second connector includes a plurality of walls that define a cavity. The cavity receives at least a portion of the body of the first connector and a wall of the plurality of walls defines a window. The sensor system is configured to capture at least one of the first color or the second color through the window and determine a status of the first connector relative to the second connector based on the captured at least one of the first color and the second color.

Yet another aspect of the disclosure provides a method. The method includes connecting a first connector with a second connector. The first connector includes a feature and the second connector includes a window. The method includes capturing, via a sensor system, a characteristic of the feature through the window. The method includes comparing, via the sensor system, a value of the characteristic to a predetermined value of the characteristic. The method includes determining, via the sensor system, a status of the first connector relative to the second connector based on the comparison of the value of the characteristic to the predetermined value.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a perspective view of a connector assembly system illustrating a connector assembly in a first assembly configuration in accordance with the principles of the present disclosure.
FIG. 2 is a perspective view of the connector assembly system of FIG. 1 illustrating the connector assembly in a second assembly configuration in accordance with the principles of the present disclosure.
FIG. 3 is a flowchart depicting an example method for operating a connector assembly system in accordance with the principles of the present disclosure.

In the drawings, reference numbers may be reused to identify similar and/or identical elements.

### DETAILED DESCRIPTION

### INTRODUCTION

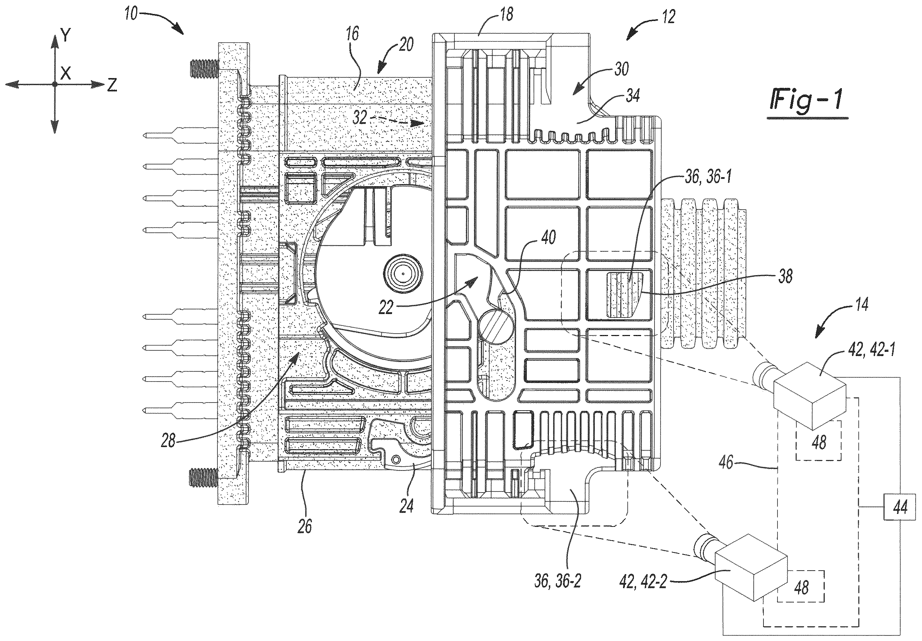

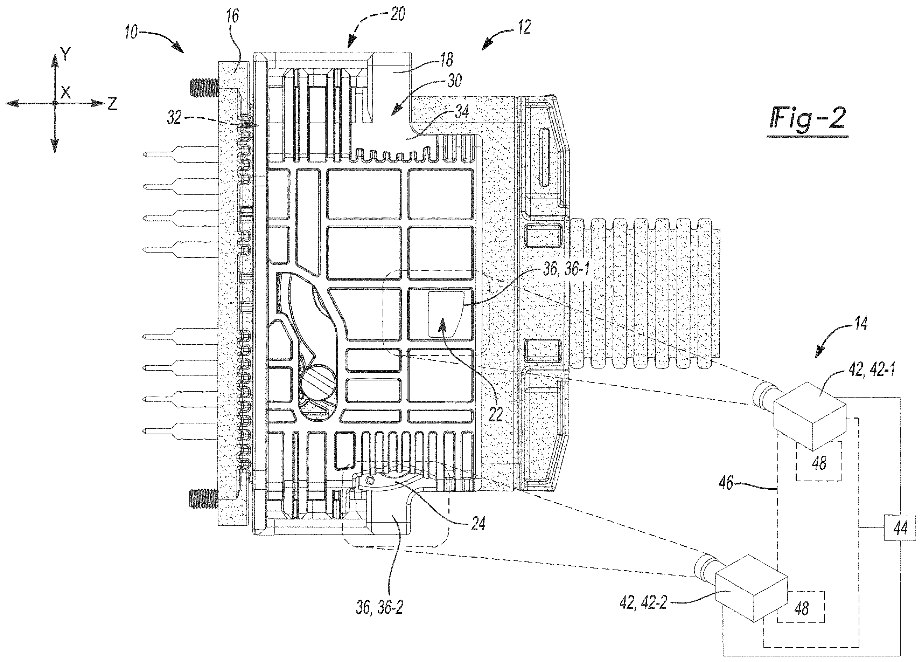

With reference to FIGS. 1 and 2, an example connector assembly system 10 is shown. As will be explained in more detail below, the connector assembly system 10 may include a connector assembly 12 and a sensor system 14. In use, the connector assembly 12 may be installed in a vehicle (e.g., an automobile) to facilitate the transmission of electricity between various electronic components within the vehicle. For example, the connector assembly 12 may be detachably coupled to a mating connector assembly (not shown), such that, during operation, of the vehicle, electricity is transmitted between the connector assemblies and to various electronic components within the vehicle.

### CONNECTOR ASSEMBLY

In various implementations, the connector assembly 12 may include a first connector 16 and a second connector 18 that mates with the first connector 16. In various implementations, the first connector 16 may comprise one or more of a variety of shapes, sizes, configurations, and/or materials. The first connector 16 may include a body 20, at least one feature 22, and/or at least one latch 24, among others.

In some example configurations, the feature 22 may be connected to the body 20. For example, the feature 22 may be coupled to, may extend from, may be integrally formed with, and/or may be disposed within the body 20. In various implementations, the feature 22 may comprise one or more of a variety of shapes, sizes, configurations, and/or materials. In some instances, the feature 22 may include a slider component and/or a cam wheel, among others.

In various implementations, the first connector 16 may include one or more characteristics that are different than one or more other characteristics of the first connector 16. For example, the feature 22 may include a different color, shape, or other characteristic from one or more other portions 28 of the first connector 16 (e.g., other portions of and/or connected to the body 20). In some example configurations, the body 20 and/or the other portions 28 of the first connector 16 may include a first color (e.g., black, etc.) and the feature 22 and/or the latch 24 may include a second color (e.g., white, blue, etc.) that is different than the first color. The first color may be associated with a first pixel value (e.g., 0, 0, 0 in the red, green, blue (RGB) color model) and the second color may be associated with a second pixel value (e.g., 255, 255, 255 in the red, green, blue (RGB) color model). While the first connector 16 is generally shown and described herein as including one feature 22, the first connector 16 may include more than one feature.

In various implementations, the latch 24 may be connected to the body 20. In some example configurations, the latch 24 may extend from a sidewall 26 of the body 20. In an assembled configuration, the latch 24 may inhibit movement of the second connector 18 relative to the first connector 16. While the first connector 16 is generally shown and described herein as including one latch 24, the first connector 16 may include more than one latch.

In various implementations, the second connector 18 may comprise one or more of a variety of shapes, sizes, configurations, and/or materials. The second connector 18 may include a plurality of walls 30 that define a cavity 32. In some examples, the cavity 32 may receive at least a portion of the first connector 16 (e.g., at least a portion of the body 20). In some example configurations, the plurality of walls 30 include a sidewall 34 that defines at least one window 36 through which the first connector 16 is visible when the first connector 16 is mated with the second connector 18 (see, e.g., FIG. 2).

In various implementations, the second connector 18 may include a first window 36-1 and a second window 36-2. The first window 36-1 and the second window 36-2 are each associated with a pixel count (e.g., 1000 pixels). In some example configurations, the first window 36-1 includes a shape that corresponds to a shape of the feature 22. For example, the window may include a curved portion 38 that includes a shape (e.g., radius) that corresponds (e.g., is substantially similar) to a shape (e.g., radius) of a peripheral portion 40 of the feature 22.

As illustrated in FIG. 1, when the first connector 16 is not fully seated in the second connector 18, the body 20 and/or portions 28 of the first connector 16 may be visible through the first window 36-1 and/or the second window 36-2. In particular, when the feature 22 is in the unmated or partially mated condition, the color (e.g., the first color) or other characteristic of the body 20 and/or the other portions 28 may be visible through the first window 36-1 and/or the second window 36-2.

With reference to FIG. 2, when the first connector 16 is fully seated in the second connector 18 (e.g., when feature 22 is completely forward in the Z-direction), the feature 22 (e.g., the second color) may be visible through the first window 36-1 and/or the latch 24 may be visible through the second window 36-2. While the second connector 18 is generally shown and described herein as including two windows, the second connector 18 may include more or less than two windows.

### SENSOR SYSTEM

The sensor system 14 may include one or more cameras 42 or other sensors and a controller 44, among others. In some implementations, the sensor system 14 includes a first camera 42-1 and a second camera 42-2. The first camera 42-1 may be focused or otherwise aimed at the first window 36-1 to capture visual information (e.g., images, video feed, etc.) associated with the first window 36-1. The second camera 42-2 may be focused or otherwise aimed at the second window 36-2 1 to capture visual information (e.g., images, video feed, etc.) associated with the second window 36-2. While the sensor system 14 is generally shown and described herein as including two cameras, the sensor system 14 may include more or less than two cameras. In particular, the system and methods described herein may include or otherwise be performed by a single camera (e.g., the first camera 42-1 or the second camera 42-2).

In various implementations, the controller 44 may be communicatively coupled to the first camera 42-1 and the second camera 42-2. The controller 44 may control operation of, and may receive the visual information captured from, the first camera 42-1 and the second camera 42-2. The controller 44 may determine a status of the first connector 16 and the second connector 18 based on the visual information captured by the first camera 42-1 and the second camera 42-2.

In various implementations, the controller 44 includes an electronic controller and/or an electronic processor, such as a programmable microprocessor and/or microcontroller. The controller 44 may include an application specific integrated circuit (ASIC). The controller 44 may include a central processing unit (CPU), a memory (e.g., a non-transitory computer-readable storage medium), and/or an input/output (I/O) interface. The controller 44 may perform various functions, including those described in greater detail herein, with appropriate programming instructions and/or code embodied in software, hardware, and/or other medium. The controller 44 may include a plurality of controllers. The controller 44 may be connected to a display, such as a touch screen.

In various implementations, the sensor system 14 may be connected to a robot 46 having at least one arm 48. In some example configurations, the first camera 42-1 and the second camera 42-1 may be connected to the arm 48. In other configurations, the first camera 42-1 and/or the second camera 42-1 may not be coupled to the robot 46. The first camera 42-1 and the second camera 42-1 may be positioned on and/or may move relative to the arm 48 to capture the visual information (e.g., images, video feed, etc.) of the connector assembly 12 at various angles. In various implementations, the robot 46 may assemble the connector assembly 12.

### OPERATION OF CONNECTOR ASSEMBLY SYSTEM

During operation of the connector assembly system 10, the first camera 42-1 may capture a first characteristic associated with the first window 36-1 and the second camera 42-2 may capture a second characteristic associated with the second window 36-2. The sensor system 14 (e.g., the controller 44) may compare (i) the first characteristic associated with the first window 36-1 with a predetermined value of the first characteristic, and (ii) the second characteristic associated with the second window 36-2 with a predetermined value of the second characteristic. For example, the sensor system 14 (e.g., the controller 44) may determine a quantity of pixels of a predetermined color (e.g., the second color associated with the second pixel value) that is captured by the first camera 42-1 through the first window 36-1, and the sensor system 14 may determine a quantity of pixels of a predetermined color (e.g., the second color associated with the second pixel value) that is captured by the second camera 42-2 through the second window 36-2.

The sensor system 14 (e.g., the controller 44) may compare the quantity of pixels of the predetermined color (e.g., the second color associated with the second pixel value) captured by the first and second cameras 42-1, 42-2. If the quantity of pixels of the predetermined color (e.g., the second color associated with the second pixel value) captured by the first and second cameras 42-1, 42-2 is equal to or exceeds a threshold quantity of the pixels of the predetermined color (e.g., 800 pixels), the sensor system 14 (e.g., the controller 44) may determine that the connector assembly 12 is fully assembled. If the quantity of pixels of the predetermined color captured by the first and second cameras 42-1, 42-2 is less than the threshold quantity of the pixels of the predetermined color (e.g., 800 pixels), the sensor system 14 (e.g., the controller 44) may determine that the connector assembly 12 is not fully assembled. In this way, a partially mated connector assembly 12 is detectable as one or both of the windows 36-1, 36-2 will not display the correct pixel count of a unique characteristic (e.g., color) when the connector assembly 12 is not fully mated, such that the connector assembly system 10 may avoid using haptic feedback and/or secondary components to ensure that the connector assembly 12 is fully mated.

In various implementations, the second camera 42-2 may capture a presence of the latch 24 through the second window 36-2. The controller 44 may determine a status of the first connector 16 and the second connector 18 based on the presence of the latch 24 through the second window 36-2. In various implementations, the status of the first connector 16 and the second connector 18 may be fully mated when the latch 24 is viewable in the second window 36-2. The status of the first connector 16 and the second connector 18 may be not fully mated when the latch 24 is not viewable in the second window 36-2.

### FLOWCHART

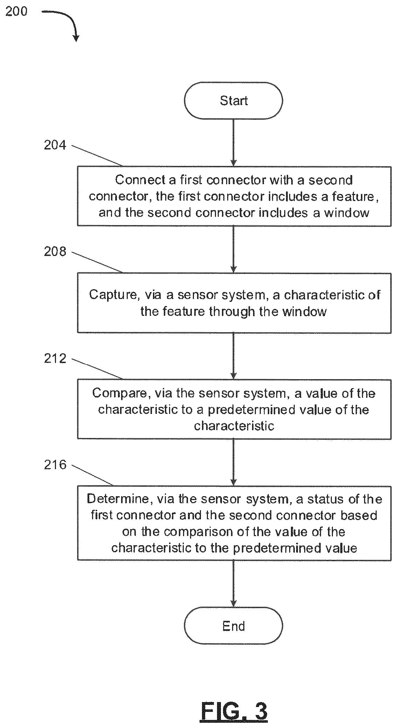

FIG. 3 is an example method 200 for operating a connector assembly system 10. The method 200 may begin at 204. At 204, a user or a robot 46 may connect a first connector 16 with a second connector 18. The first connector 16 may include a body 20 and a feature 22 and a latch 24 connected to the body 20. The body 20 may include a first color (e.g., black) that is associated with a first pixel value (e.g., 0, 0, 0 in the red, green, blue (RGB) color model). The feature 22 may include a second color (e.g., white) that is associated with a second pixel value (e.g., 255, 255, 255 in the red, green, blue (RGB) color model). The second connector 18 may include a plurality of walls 30 that define a cavity 32. A sidewall 34 of the plurality of walls 30 may define a first window 36-1 and a second window 36-2. The first window 36-1 and the second window 36-2 may be each associated with a pixel count (e.g., 1000 pixels). In some examples, connecting the first connector 16 with the second connector 18 may include disposing at least a portion of the body 20 in the cavity 32 and moving the second connector 18 in the Z-direction to seat the second connector 18 with the first connector 16. The method 200 may proceed to 208.

At 208, a first camera 42-1 of a sensor system 14 may capture a first characteristic (e.g., presence of the second color) of the feature 22 through the first window 36-1 and/or a second camera 42-2 of the sensor system 14 may capture a second characteristic (e.g., presence of the latch 24) through the second window 36-2. The method 200 may proceed to 212.

At 212, a controller 44 of the sensor system 14 may compare a value of the first characteristic (e.g., a quantity of pixels of the pixel count that includes the second pixel value) to a predetermined value of the characteristic (e.g., a threshold amount). The method 200 may proceed to 216.

At 216, the controller 44 may determine a status of the first connector 16 and the second connector 18 based on the comparison of the value of the characteristic to the predetermined value. For example, the status of the first connector and the second connector may be fully mated when the value of the first characteristic (e.g., quantity of pixels of the pixel count that includes the second pixel value) exceeds the threshold amount (e.g., 800 pixels). The status of the first connector and the second connector may be not fully mated when the value of the first characteristic (e.g., quantity of pixels of the pixel count that includes the second pixel value) is less than the threshold amount (e.g., 800 pixels).

In various implementations, the controller 44 may determine an additional status of the first connector 16 and the second connector 18 based on the captured second characteristic. For example, the additional status of the first connector 16 and the second connector 18 may be fully mated when the latch 24 is viewable in the second window 36-2. The additional status of the first connector 16 and the second connector 18 may be not fully mated when the latch 24 is not viewable in the second window 36-2. Then the method 200 may end.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure, said scope being defined by the set of claims.

## Claims

1. A connector assembly system (10) comprising:
a first connector (16) having a feature (22), wherein the feature (22) includes one of a slider component or a cam wheel;
wherein the first connector (16) includes a latch (24) and a body (20) having a first color that is associated with a first pixel value; and
wherein the feature (22) is connected with the body (20) and includes a second color that is associated with a second pixel value that is different than the first pixel value;
a second connector (18) configured to mate with the first connector (16) and having a window (36); and
a sensor system (14) configured to:
capture a characteristic of the feature (22) through the window (36-1);
compare a value of the characteristic to a predetermined value of the characteristic; and
determine a status of the first connector (16) relative to the second connector (18) based on the comparison of the value of the characteristic to the predetermined value;
wherein the sensor system includes a first camera (42-1) and a second camera (42-2);
wherein the first camera (42-1) is at least one of focused or aimed at the window (36) of the second connector (18); and
wherein the second camera (42-2) is at least one of focused or aimed at an additional window (36-2) of the second connector (18),
the sensor system (14) being further configured to:
capture a presence of the latch (24) through the additional window (36-2); and determine an additional status of the first connector (16) relative to the second connector (18) based on the presence of the latch (24) through the additional window (36-2).

2. The connector assembly system (10) of claim 1 wherein the status of the first connector (16) relative to the second connector (18) is fully mated.

3. The connector assembly system (10) of claim 1, wherein:
the window (36-1) is associated with a pixel count;
the sensor system (14) is configured to determine a quantity of pixels of the pixel count that includes the second pixel value;
the status of the first connector (16) relative to the second connector (18) is fully mated when the quantity of pixels exceeds a threshold amount; and
the status of the first connector (16) relative to the second connector (18) is not fully mated when the quantity of pixels is less than the threshold amount.

4. The connector assembly system (10) of any one of the preceding claims wherein the window (36-1) includes a shape that corresponds to a shape of the feature (22).

5. The connector assembly system (10) of any one of the preceding claims wherein:
the second connector (18) includes a plurality of walls (30) that define a cavity (32);
the first connector (16) includes a body (20) and the feature (22) is connected to the body; and
the cavity (32) receives at least a portion of the body (20).

6. The connector assembly system (10) of any one of the preceding claims wherein:
a wall of the second connector (18) defines the window (36-1) and the additional window (36-2); and
wherein the additional status of the first connector (16) relative to the second connector (18) is fully mated when the latch (24) is viewable in the additional window (36-2).

7. The connector assembly system (10) of claim 6 wherein the additional status of the first connector (16) relative to the second connector (18) is not fully mated when the latch (24) is not viewable in the additional window (36-2).

8. The connector assembly system (10) of claim 1, wherein at least one of the first camera (42-1) or the second camera (42-2) is connected to a robot (46).

9. A method for operating the system of any one of the previous claims, the method comprising:
connecting the first connector (16) with the second connector (18),
capturing, via a sensor system (14), a characteristic of the feature (22) through the window (36-1),
comparing, via the sensor system (14), a value of the characteristic to a predetermined value of the characteristic; and
determining, via the sensor system (14), a status of the first connector (16) relative to the second connector (18) based on the comparison of the value of the characteristic to the predetermined value.

## Patentansprüche

1. Ein Verbinderanordnungssystem (10), umfassend:
einen ersten Verbinder (16) mit einem Merkmal (22), wobei das Merkmal (22) eines von einer Schieberkomponente oder einem Nockenrad umfasst;
wobei der erste Verbinder (16) eine Verriegelung (24) und einen Körper (20) mit einer ersten Farbe umfasst, die einem ersten Pixelwert zugeordnet ist; und
wobei das Merkmal (22) mit dem Körper (20) verbunden ist und eine zweite Farbe umfasst, die einem zweiten Pixelwert zugeordnet ist, der sich von dem ersten Pixelwert unterscheidet;
einen zweiten Verbinder (18), der so konfiguriert ist, dass er mit dem ersten Verbinder (16) zusammenpasst und ein Fenster (36) hat; und
ein Sensorsystem (14), das konfiguriert ist zum:
Erfassen einer Eigenschaft des Merkmals (22) durch das Fenster (36-1);
Vergleichen eines Wertes der Eigenschaft mit einem vorbestimmten Wert der Eigenschaft; und
Bestimmen eines Status des ersten Verbinders (16) relativ zu dem zweiten Verbinder (18) auf der Grundlage des Vergleichs des Wertes der Eigenschaft mit dem vorbestimmten Wert;
wobei das Sensorsystem eine erste Kamera (42-1) und eine zweite Kamera (42-2) umfasst;
wobei die erste Kamera (42-1) mindestens eines von auf das Fenster (36) des zweiten Verbinders (18) fokussiert oder gerichtet ist; und
wobei die zweite Kamera (42-2) mindestens eines von auf ein zusätzliches Fenster (36-2) des zweiten Verbinders (18) fokussiert oder gerichtet ist, wobei das Sensorsystem (14) ferner konfiguriert ist zum:
Erfassen eines Vorhandenseins der Verriegelung (24) durch das zusätzliche Fenster (36-2); und Bestimmen eines zusätzlichen Status des ersten Verbinders (16) relativ zu dem zweiten Verbinder (18) auf der Grundlage des Vorhandenseins der Verriegelung (24) durch das zusätzliche Fenster (36-2).

2. Das Verbinderanordnungssystem (10) nach Anspruch 1, wobei der Status des ersten Verbinders (16) relativ zu dem zweiten Verbinder (18) vollständig zusammengefügt ist.

3. Das Verbinderanordnungssystem (10) nach Anspruch 1, wobei:
das Fenster (36-1) einer Pixelanzahl zugeordnet ist;
das Sensorsystem (14) so konfiguriert ist, dass es eine Anzahl von Pixeln der Pixelanzahl bestimmt, die den zweiten Pixelwert umfasst;
der Status des ersten Verbinders (16) relativ zu dem zweiten Verbinder (18) vollständig zusammengefügt ist, wenn die Anzahl der Pixel einen Schwellenwert überschreitet; und
der Status des ersten Verbinders (16) relativ zu dem zweiten Verbinder (18) nicht vollständig zusammengefügt ist, wenn die Anzahl der Pixel kleiner als der Schwellenwert ist.

4. Das Verbinderanordnungssystem (10) nach einem der vorhergehenden Ansprüche, wobei das Fenster (36-1) eine Form beinhaltet, die einer Form des Merkmals (22) entspricht.

5. Das Verbinderanordnungssystem (10) nach einem der vorhergehenden Ansprüche, wobei:
der zweite Verbinder (18) eine Vielzahl von Wänden (30) beinhaltet, die einen Hohlraum (32) definieren;
der erste Verbinder (16) einen Körper (20) beinhaltet und das Merkmal (22) mit dem Körper verbunden ist; und
der Hohlraum (32) mindestens einen Teil des Körpers (20) aufnimmt.

6. Das Verbinderanordnungssystem (10) nach einem der vorhergehenden Ansprüche, wobei:
eine Wand des zweiten Verbinders (18) das Fenster (36-1) und das zusätzliche Fenster (36-2) definiert; und
wobei der zusätzliche Status des ersten Verbinders (16) relativ zu dem zweiten Verbinder (18) vollständig zusammengefügt ist, wenn die Verriegelung (24) in dem zusätzlichen Fenster (36-2) sichtbar ist.

7. Das Verbinderanordnungssystem (10) nach Anspruch 6, wobei der zusätzliche Status des ersten Verbinders (16) relativ zu dem zweiten Verbinder (18) nicht vollständig zusammengefügt ist, wenn die Verriegelung (24) in dem zusätzlichen Fenster (36-2) nicht sichtbar ist.

8. Das Verbinderanordnungssystem (10) nach Anspruch 1, wobei mindestens eine der ersten Kamera (42-1) oder der zweiten Kamera (42-2) mit einem Roboter (46) verbunden ist.

9. Ein Verfahren zum Betreiben des Systems nach einem der vorhergehenden Ansprüche, wobei das Verfahren umfasst:
Verbinden des ersten Verbinders (16) mit dem zweiten Verbinder (18), Erfassen einer Eigenschaft des Merkmals (22) durch das Fenster (36-1) über ein Sensorsystem (14),
Vergleichen eines Wertes der Eigenschaft mit einem vorbestimmten Wert der Eigenschaft über das Sensorsystem (14); und
Bestimmen eines Status des ersten Verbinders (16) relativ zu dem zweiten Verbinder (18) über das Sensorsystem (14) auf der Grundlage des Vergleichs des Wertes der Eigenschaft mit dem vorbestimmten Wert.

## Revendications

1. Un système d'ensemble de connecteurs (10) comprenant :
un premier connecteur (16) ayant une particularité (22), la particularité (22) comprenant l'un d'entre un composant de curseur ou une roue à came ;
dans lequel le premier connecteur (16) comprend un verrou (24) et un corps (20) ayant une première couleur qui est associée à une première valeur de pixel ; et
dans lequel la particularité (22) est reliée au corps (20) et a une seconde couleur qui est associée à une seconde valeur de pixel qui est différente de la première valeur de pixel ;
un second connecteur (18) configuré pour s'emboîter avec le premier connecteur (16) et ayant une fenêtre (36) ; et
un système de capteur (14) configuré pour :
capturer une caractéristique de la particularité (22) au travers de la fenêtre (36-1) ;
comparer une valeur de la caractéristique à une valeur prédéterminée de la caractéristique ; et
déterminer un statut du premier connecteur (16) par rapport au second connecteur (18) sur la base de la comparaison de la valeur de la caractéristique à la valeur prédéterminée ;
dans lequel le système capteur comprend une première caméra (42-1) et une seconde caméra (42-2) ;
dans lequel la première caméra (42-1) est au moins un entre focalisée sur, ou visant, la fenêtre (36) du second connecteur (18) ; et
dans lequel la seconde caméra (42-2) est au moins un entre focalisée sur, ou visant, une fenêtre supplémentaire (36-2) du second connecteur (18),
le système capteur (14) étant en outre configuré pour :
capturer une présence du verrou (24) au travers de la fenêtre supplémentaire (36-2) ; et
déterminer un statut supplémentaire du premier connecteur (16) par rapport au second connecteur (18) sur la base de la présence du verrou (24) au travers de la fenêtre supplémentaire (36-2).

2. Le système d'ensemble de connecteurs (10) de la revendication 1 dans lequel le statut du premier connecteur (16) par rapport au second connecteur (18) est un emboitement complet.

3. Le système d'ensemble de connecteurs (10) de la revendication 1, dans lequel :
la fenêtre (36-1) est associée à un compte de pixels ;
le système capteur (14) est configuré pour déterminer une quantité de pixels du compte de pixels qui incluent la seconde valeur de pixel ;
le statut du premier connecteur (16) par rapport au second connecteur (18) est un emboitement complet lorsque la quantité de pixels dépasse une quantité seuil ; et
le statut du premier connecteur (16) par rapport au second connecteur (18) est un emboitement incomplet lorsque la quantité de pixels est inférieure à la quantité seuil.

4. Le système d'ensemble de connecteurs (10) de l'une des revendications précédentes dans lequel la fenêtre (36-1) comprend une forme qui correspond à une forme de la particularité (22).

5. Le système d'ensemble de connecteurs (10) de l'une des revendications précédentes dans lequel :
le second connecteur (18) comprend une pluralité de parois (30) qui définissent une cavité (32) ;
le premier connecteur (16) comprend un corps (20) et la particularité (22) est reliée au corps ; et
la cavité (32) reçoit au moins une partie du corps (20).

6. Le système d'ensemble de connecteurs (10) de l'une des revendications précédentes dans lequel :
une paroi du second connecteur (18) définit la fenêtre (36-1) et la fenêtre supplémentaire (36-2) ; et
le statut supplémentaire du premier connecteur (16) par rapport au second connecteur (18) est un emboitement complet lorsque le verrou (24) est visible dans la fenêtre supplémentaire (36-2).

7. Le système d'ensemble de connecteurs (10) de la revendication 6 dans lequel le statut supplémentaire du premier connecteur (16) par rapport au second connecteur (18) est un emboitement incomplet lorsque le verrou (24) n'est pas visible par la fenêtre supplémentaire (36-2).

8. Le système d'ensemble de connecteurs (10) de la revendication 1 dans lequel au moins l'une de la première caméra (42-1) ou de la seconde caméra (42-2) est reliée à un robot (46).

9. Un procédé de mis en œuvre du système de l'une des revendications précédentes, le procédé comprenant :
la connexion du premier connecteur (16) au second connecteur (18) ;
la capture, via un système capteur (14), d'une caractéristique de la particularité (22) au travers de la fenêtre (36-1) ;
la comparaison, via le système capteur (14), d'une valeur de la caractéristique à une valeur prédéterminée de la caractéristique ; et
la détermination, via le système capteur (14), d'un statut du premier connecteur (16) par rapport au second connecteur (18) sur la base de la comparaison de la valeur de la caractéristique à la valeur prédéterminée.
